# EUROPÄISCHE PATENTSCHRIFT

(11) **EP 2 417 695 B1**
(45) Veröffentlichungstag und Bekanntmachung des Hinweises auf die Patenterteilung: **13.08.2014**
(21) Anmeldenummer: 10711181.7
(22) Anmeldetag: 11.03.2010
(51) Int. Cl.: D21F 7/02, H02K 5/26, H02K 7/14, H02K 7/10

(54) **DREHMOMENTSTÜTZE**
TORQUE SUPPORT
BRAS DE RÉACTION

(30) Priorität: 06.04.2009 DE 102009003747
(43) Veröffentlichungstag der Anmeldung: 15.02.2012
(73) Patentinhaber: AS Drives & Services GmbH, 48734 Reken (DE)
(72) Erfinder: KASPARI, Gerd, 48653 Coesfeld (DE); RIBBERS, Walter, 46348 Raesfeld Erle (DE); JAGODOWSKI, Andre, 46342 Velen (DE)
(74) Vertreter: Wittmann, Ernst-Ulrich
(86) Internationale Anmeldenummer: PCT/EP2010/053107
(87) Internationale Veröffentlichungsnummer: WO 2010/115676

(56) Entgegenhaltungen:
- EP-A1- 1 158 188
- EP-A2- 0 689 277
- EP-A2- 0 924 338
- EP-A2- 1 849 913
- DE-A1- 10 026 840
- DE-A1-102005 061 085

## Beschreibung

Die Erfindung betrifft eine Drehmomentstütze für Motoren, insbesondere Direktmotoren.

Drehmomentstützen sind im Stand der Technik beispielsweise aus der EP 0 689 277 A2 oder der EP 0 924 338 A2 bekannt. Sie dienen dem Auffangen eines Reaktionsmoments. Typischerweise werden Drehmomentstützen zur Einleitung des aufgefangenen Reaktionsmoments an eigens dafür vorgesehenen Fundamenten oder an der Stuhlung verankert. Insbesondere bei getriebelosen Direktmotoren (auch als Torquemotoren bezeichnet) ist aus räumlichen Gründen die Verankerung an Gegenlagern außerhalb der Stuhlung meist nicht möglich. Aus diesen Gründen bleibt oft nur die Anbindung an der Stuhlung.

Nachteilig an einer solchen Anbindung einer Drehmomentstütze ist es jedoch, dass entweder, je nach Leistung des Motors, entsprechend große Gegenlager vorgesehen werden müssen, oder eine, ebenfalls der Leistung entsprechende stabile Aufnahme an der Stuhlung ausgebildet werden muss. Hierbei zeigt es sich als besonders problematisch, dass die wirkenden Kräfte auf die gesamte Anlage wirken. Mögliche Folgen hierdurch können Materialermüdung sein, wodurch gegebenenfalls weitreichende Sanierungsmaßnahmen getroffen werden müssen. Das führt nicht zuletzt auch zu längeren Stillstandzeiten der betroffenen Maschinen bzw. zu höheren Kosten.

Des weiteren haben beide Verfahren der Befestigung der Drehmomentstützen gemein, dass zur Aufnahme der wirkenden Kräfte unter Umständen sehr große Gegenlager in oder an der Anlage integriert werden müssen, was die Möglichkeiten einer kompakten Bauweise empfindlich einschränkt.

Aufgabe der vorliegenden Erfindung ist es, die im Stand der Technik bekannten Nachteile wenigstens teilweise zu verbessern.

Insbesondere ist es Aufgabe der vorliegenden Erfindung, die Drehmomentstütze unter den räumlichen Grenzen bei der Verwendung von Torquemotoren von den übrigen Teilen der Anlage, wie zum Beispiel der Stuhlung zumindest teilweise zu entkoppeln bzw. die Kräfte zu verteilen.

Die vorstehende Aufgabe wird mit einer erfindungsgemäßen Vorrichtung zur Kopplung von wenigstens zwei Motoren gemäß Anspruch 1 gelöst. Bevorzugte Ausgestaltungen weiterer Ausführungsformen sind Gegenstand der Unteransprüche.

Erfindungsgemäß weist die Drehmomentstütze für Direktmotoren ein System mit wenigstens einem ersten und zweiten Befestigungselement zur drehfesten Montage an wenigstens einem ersten und einem zweiten Direktmotorund wenigstens einem Verbindungselement zwischen dem ersten und dem zweiten Befestigungselement auf. Die erfindungsgemäße Drehmomentstütze ist dadurch gekennzeichnet, dass das System modular aufgebaut ist und das von dem ersten und zweiten Befestigungselement austauschbare Verbindungselement zum Ausgleich von Abstandsdifferenzen wenigstens in seiner Längsrichtung beweglich ausgeführt ist und mit wenigstens einem Kopplungsbereich mit dem ersten und / oder dem zweiten Befestigungselement einen sphärischen Bewegungsausgleich bereitstellt.

Dabei wird als längsbeweglich gemäß der vorliegenden Erfindung ein Verbindungselement verstanden, welches in Bezug auf den Abstand zwischen zwei Antrieben flexibel anpassbar ist.

Das Verbindungselement der erfindungsgemäßen Drehmomentstütze ist, gemäß einer besonders bevorzugten Ausführungsform kippbeweglich und / oder torsionsbeweglich ausgeführt. Als kippbeweglich wird dabei ein Verbindungselement verstanden, welches insbesondere Unterschiede in der parallelen Ausrichtung zweier Antriebe und deren Achsen zueinander ausgleichen kann. Als torsionsbeweglich wird ferner ein Verbindungselement verstanden, welches sich wenigstens aufgrund seiner Konstruktionseigenschaft entlang seiner Haupterstreckungsrichtung in einem vorgegebenen Maß verwinden, d. h. tordieren lässt. Hierfür ist es u. a. nicht notwendig, dass zusätzliche Gelenke vorgesehen sind, sondern dass das durch den Aufbau des Bauteils und der damit bereitgestellten Elastizität für eine Torsion bewirkt wird. Selbstverständlich liegt es auch im Sinne der vorliegenden Erfindung, dass die Längs-, Kipp- und Torsionsbeweglichkeit nicht nur ausschließlich durch das Verbindungselement selbst, sondern insbesondere durch das Zusammenwirken mit der / den Befestigungseinrichtungen bereitgestellt wird.

Das Verbindungselement der erfindungsgemäßen Drehmomentstütze stellt einen sphärischen Bewegungsausgleich zwischen den hiermit verbundenen Direktmotoren bereit. Als sphärisch in Sinne der vorliegenden Erfindung wird die Ausdehnung oder Wirkung in den drei Raumdimensionen verstanden, woher selbstverständlich eine Rotation um die Achse/Achsen des Motors bzw. der Motoren verhindert wird.

Gemäß einer weiteren, besonders bevorzugten Ausführungsform der erfindungsgemäßen Drehmomentstütze wird die Kippbeweglichkeit durch ein Scharnier, eine Kupplung, ein Gelenk oder eine Kombination hiervon und dergleichen bewirkt.

Die erfindungsgemäße Drehmomentstütze weist gemäß einer weiteren, besonders bevorzugten Ausführungsform ein segmentiertes Verbindungselement auf, wobei die Segmente mittels eines Kopplungsbereiches verbunden sind. Dabei wird als segmentiert gemäß der vorliegenden Erfindung vorzugsweise eine dreidimensionale Ausgestaltung in Form einer Ausfräsung, wie z.B. einer Nut, und / oder eines Vorsprungs, wie z.B. einer Feder, sowie sich abwechselnde Kombinationen davon. Selbstverständlich sind diese Segmente im Sinne der vorliegenden Erfindung nicht auf gradlinige Formen beschränkt, sondern können vielmehr auch andere Linienführungen, insbesondere die von Kreisen und / oder Kreissegmenten, aufweisen.

Gemäß einer weiteren, besonders bevorzugten Ausführungsform der erfindungsgemäßen Drehmomentstütze weist der Kopplungsbereich des segmentieren Verbindungselementes einen Stutzen und einen Aufnahmebereich auf, wobei der Stutzen in dem Aufnahmebereich längsverschiebbar und / oder drehbeweglich gelagert und insbesondere hierzu teleskopierbar ist.

Gemäß einer weiteren, besonders bevorzugten Ausführungsform der erfindungsgemäßen Drehmomentstütze ist der Kopplungsbereich des segmentieren Verbindungselementes als Gleitkupplung zwischen wenigstens einem ersten und einem zweiten Segment des Verbindungselementes ausgeführt.

Gemäß einer weiteren, besonders bevorzugten Ausführungsform der erfindungsgemäßen Drehmomentstütze stellt der als Gleitkupplung ausgeführte Kopplungsbereich des segmentieren Verbindungselementes wenigstens eine längsverschiebbare Nut- und Federverbindung zwischen den Segmenten des Verbindungselementes bereit. Gemäß einer weiteren, besonders bevorzugten Ausführungsform ist die Tiefe der die Feder aufnehmenden Nut tiefer, als die der Federn. Gemäß einer weiteren, besonders bevorzugten Ausführungsform ist in der Nut ein Profil insbesondere auswechselbar angeordnet, welches insbesondere seinerseits eine die Feder unmittelbar aufnehmende Aufnehmung aufweist.

Gemäß einer weiteren, besonders bevorzugten Ausführungsform der erfindungsgemäßen Drehmomentstütze ist die Befestigungseinrichtung mit dem Gehäuse des Motors bzw. mit dessen Stator form- und / oder kraft- und / oder stoffschlüssig verbunden und insbesondere mit diesem verschraubt.

Gemäß einer weiteren, besonders bevorzugten Ausführungsform der erfindungsgemäßen Drehmomentstütze ist die Befestigungseinrichtung an einer Stirnseite des Motors angeordnet und insbesondere ringförmig ausgeführt.

Die erfindungsgemäße Drehmomentstütze weist gemäß einer weiteren, besonders bevorzugten Ausführungsform eine Verschraubung mit einem federelastischen Distanzelement auf. Dieses dient insbesondere dazu, die Befestigungseinrichtung mit dem Verbindungselement wenigstens längsbeweglich zu verbinden, wobei die Verschraubung über lediglich einen Teil seines gesamtmöglichen Federweges vorgespannt ist.

Die erfindungsgemäße Drehmomentstütze ist gemäß einer weiteren, besonders bevorzugten Ausführungsform dadurch gekennzeichnet, dass wenigstens eine Befestigungseinrichtung wenigstens teilweise ein Segment des Verbindungselementes bildet.

Gemäß einer weiteren, besonders bevorzugten Ausführungsform weist das Verbindungselement der erfindungsgemäßen Drehmomentstütze drei Segmente und / oder wenigstens zwei Kopplungsbereiche zwischen den Segmenten auf.

Gemäß einer weiteren, besonders bevorzugten Ausführungsform der erfindungsgemäßen Drehmomentstütze wird die Führung der Segmente mittels Blattfedern, insbesondere vorgespannten Blattfedern bewirkt.

Gemäß einer weiteren, besonders bevorzugten Ausführungsform der erfindungsgemäßen Drehmomentstütze ist der Motor als Direktantrieb für die Aufnahme von Antriebswellen bis zu einem Durchmesser von 300 mm, insbesondere für einen Durchmesser zwischen 100 mm und 300 mm und bevorzugt für 125 mm, 150 mm, 175 mm, 200 mm, 225 mm, 250 mm und / oder 275 mm ausgelegt.

Gemäß einer weiteren, besonders bevorzugten Ausführungsform der erfindungsgemäßen Drehmomentstütze ermöglicht der Motor die Ein- und Anbindung eines Dampfkopfes mit wenigstens einer Hohlwelle. Dabei wird als Dampfkopf gemäß der vorliegenden Erfindung insbesondere eine Drehdurchführung zum Anschluss von Drucksystemen an die entsprechend angefertigten Elemente wie z. B. eine Heizwalze verstanden.

Gemäß einer weiteren, besonders bevorzugten Ausführungsform der erfindungsgemäßen Drehmomentstütze ist zwischen dem Dampfkopf bzw. der Hohlwelle und dem Motor eine thermische Isolation vorgesehen. Dies ist insbesondere bei der Montage an Trockensystemen wie z. B. Trockenzylindern von Bedeutung. Hier wird bis zu 200°C heißer Dampf durch die Hohlwelle zum Zylinders geführt. Hinzu kommt die Wärmeentwicklung des elektromotorischen Antriebes selbst. Um die elektronischen Bauteile in ihrer Dauerfunktion nicht zu beeinträchtigen, sollten diese nur mit 120°C belastet werden, wobei durch die thermische Entkoppelung die thermische Belastung reduziert werden kann. Gegebenenfalls sind weitere Vorrichtungen, insbesondere Kühlaggregate bzw. Einrichtungen für den Antrieb selbst vorzusehen.

Gemäß einer weiteren, besonders bevorzugten Ausführungsform der erfindungsgemäßen Drehmomentstütze ist im Bereich der Hohlwelle eine Lagerglocke vorgesehen. Dabei wird die Lagerglocke in der Verwendung mit einem Dampfkopf insbesondere im Sinne der vorliegenden Erfindung als zusätzliche Abstützung für den Dampfkopf an der Welle verwendet.

Die vorliegende Erfindung umfasst ferner auch die Verwendung der erfindungsgemäßen Drehmomentstütze für den Antrieb von Zylindern, Walzen und dergleichen in einer Papiermaschine, Druckmaschine, Walzwerken und dergleichen.

Die Erfindung wird nachfolgend anhand bevorzugter Ausführungsbeispiele erläutert, wobei darauf hingewiesen wird, dass durch diese Beispiele Abwandlungen, beziehungsweise Ergänzungen, wie sie sich dem Fachmann unmittelbar ergeben mit umfasst sind. Darüber hinaus stellen diese bevorzugten Ausführungsbeispiele keine Beschränkungen der Erfindung in der Art dar, dass Abwandlungen und Ergänzungen auch im Umfang der vorliegenden Erfindung liegen.

Dabei zeigen:
Figur 1 die Kopplung zweier Motoren mittels einer segmentierten Stütze in verschiedenen Perspektiven (a, b, c) und einer partiellen Explosionszeichnung (d) gemäß der vorliegenden Erfindung;
Figur 2 ein weiteres System aus drei Bestandteilenteilen mit bearbeiteten Kontaktflächen und vier Blattfederkomponenten in verschiedenen Perspektiven (a, b, c) und einer partiellen Explosionszeichnung (d) gemäß der vorliegenden Erfindung;
Figur 3 ein weiteres bauteilreduziertes System in verschiedenen Perspektiven (a, b, c) und einer partiellen Explosionszeichnung (d), welches das Verständnis der vorliegenden Erfindung erleichtert;
Figur 4 die Kopplung zweier Motoren mittels einer alternativen segmentierten Stütze.

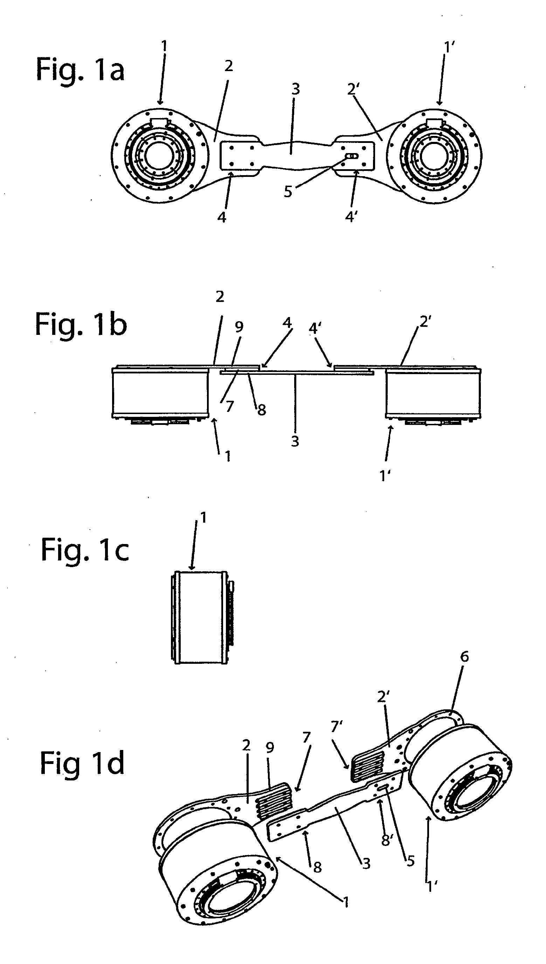

Das Ausführungsbeispiel gemäß Figur 1 zeigt die Kopplung zweier Motoren 1,1' mittels eines Verbindungselementes 3 zwischen der ersten und zweiten jeweils drehfest an den Motoren 1, 1' montierten Befestigungseinrichtungen 2, 2'. Die Befestigungseinrichtungen 2, 2' sind unter Verwendung entsprechender Bohrungen 6 stirnseitig mit dem Gehäuse des Motors verschraubt. In den Kopplungsbereichen 4, 4' sind das Verbindungselement 3 über die Segmente 7, 7', welche als Gleitkupplung ausgeführt sind, verbunden. Dabei bilden die Gleitkupplung Nut- und Federverbindungen, welche ineinander greifen. Das Verbindungselement 3 weist ferner eine Führung 5 im Kopplungsbereich 4 auf, um die längs-, kipp- und / oder torsionsbeweglichen Bauelemente in ihrer Position zu halten.

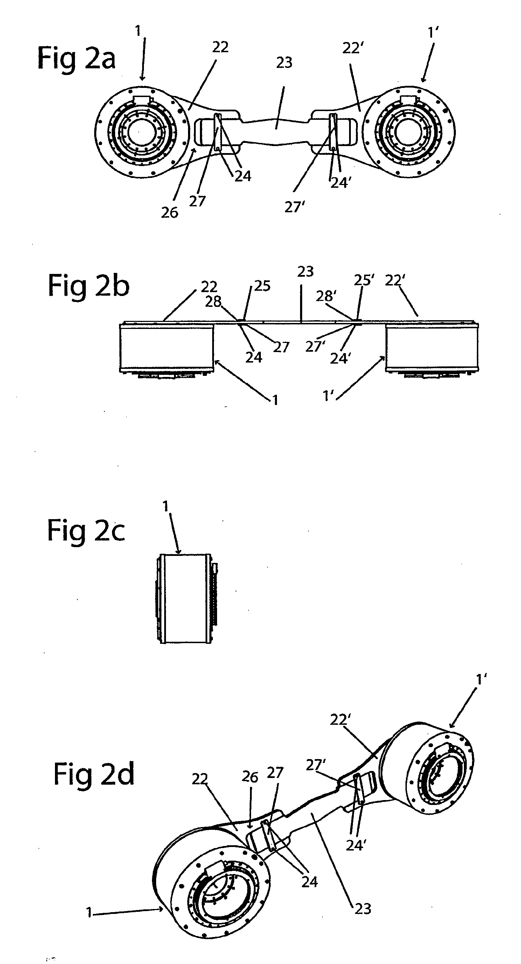

Das Ausführungsbeispiel gemäß Figur 2 stellt ein alternatives System zur Ausführungsform gemäß der Figur 1 dar. Die Befestigungseinrichtungen 22, 22' sind stirnseitig mit dem Gehäuse der Motoren 1,1' drehfest verbunden. Die Befestigungseinrichtungen 22, 22' weisen einen Aufnahmebereich 26 auf, der die Enden des Verbindungselementes 23 aufnimmt und so einen Kopplungsbereich bildet. Das Verbindungselement 23 wird beidseitig mittels Blattfederkomponenten 27, 27', 28, 28', die durch geeignete Befestigungsmittel, wie z.B. Schrauben 24, 24', 25, 25' mit den Befestigungseinrichtungen 22, 22' verbunden sind, in den Befestigungselementen 22, 22' gehalten. Auf diese Weise wird eine teleskopierbare, zum Ausgleich von Abstandsdifferenzen geeignete, Verbindung zwischen dem Verbindungselement 23 und den Befestigungselementen 22, 22' geschaffen. Das modulare System erlaubt eine einfache Montage und Wartung, bzw. einen einfachen Austausch einzelner Komponenten. So kann des Verbindungselement nach Montage der Befestigungselemente mit den Blattfederkomponenten einfach eingesetzt und befestigt werden.

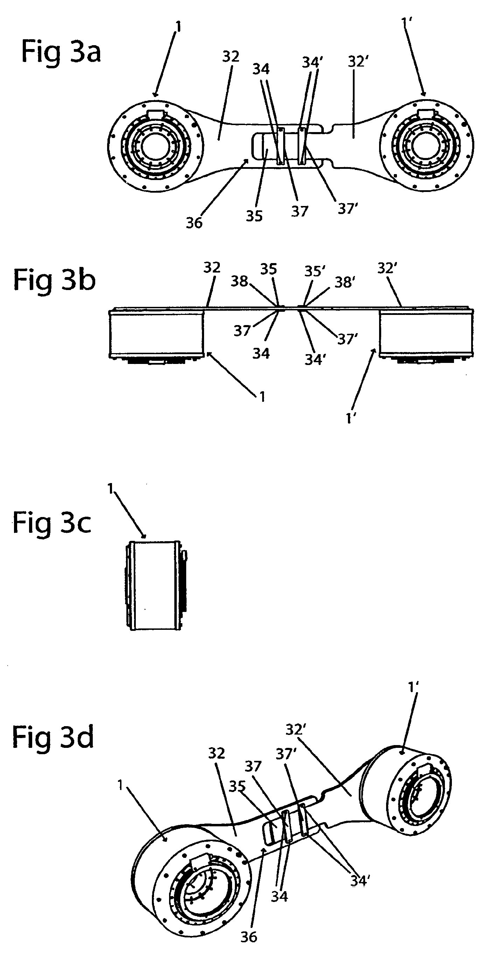

Das Ausführungsbeispiel gemäß Figur 3 stellt eine Ausführung des Systems nach Figur 2, welches das Verständnis der Erfindung erleichtert, dar. Die Befestigungselemente 32, 32' sind hierbei unterschiedlich ausgeführt. Das eine Befestigungselement 32 weist einen Aufnahmebereich 36 auf, wobei das andere Befestigungselement 32' das Verbindungsglied 35 damit umfasst. Beide Befestigungselemente sind stirnseitig und drehfest mit den Gehäusen der Motoren 1, 1' verbunden. Der Aufnahmebereich 36 des Befestigungselementes 32 umfasst das Verbindungsglied 35 des Befestigungselementes 32'. Die Blattfederkomponenten 37, 37', 38, 38' sind durch geeignete Befestigungsmittel, wie z.B. Schrauben 34, 34', 35, 35' an dem Befestigungselement 32 befestigt.

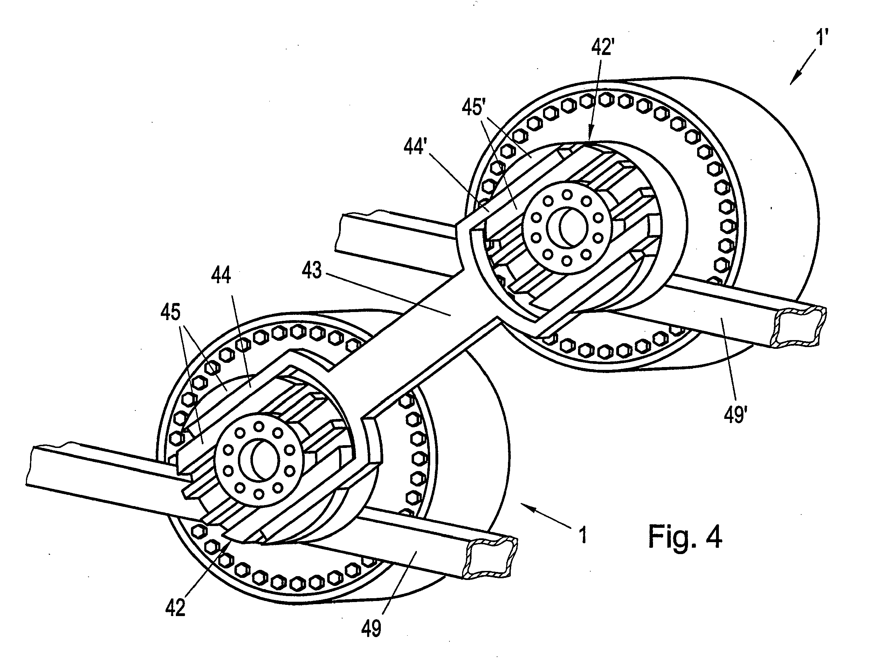

Das Ausführungsbeispiel gemäß Figur 4 zeigt ein weiteres Beispiel für Befestigungselemente 42, 42' die stirnseitig drehfest mit den Motoren 1, 1' verbunden sind. Die Motoren 1, 1' sind an Trägern 49, 49' des Systems aufgehängt. Die Enden des Verbindungselementes 43 sind dabei gabelförmig ausgebildet, so dass sie zwischen die Segmente 45, 45' der Befestigungselemente 42, 42' greifen und so mit diesen die Kopplungseinheit bilden. Dabei bieten die gabelförmigen Enden 44, 44' des Verbindungselementes 43 sowohl eine Längsverschieblichkeit, als auch durch die Aufnahme in den Segmenten der Befestigungselemente 45, 45' eine Kippbeweglichkeit. Die Torsionsbeweglichkeit ergibt sich durch die Verwindungsmöglichkeit des Verbindungselements 43 zwischen den Gabeln 44 und 44'. Gemäß einer weiteren, bevorzugten Ausführungsform kann das Verbindungselement auch geschlossen ausgeführt sein.

## Patentansprüche

1. Drehmomentstütze für Direktmotoren, bestehend aus einem System mit wenigstens einem ersten und zweiten Befestigungselement zur drehfesten Montage an wenigstens einem ersten und einem zweiten Direktmotor (1, 1') und wenigstens einem Verbindungselement (3, 23, 43) zwischen dem ersten und zweiten Befestigungselement (2, 2', 22, 22', 32, 32', 42, 42'),
**dadurch gekennzeichnet, dass**
das System modular aufgebaut ist und das von dem ersten und zweiten Befestigungselement austauschbare Verbindungselement (3, 23, 43) wenigstens in seiner Längsrichtung, zum Ausgleich von Abstandsdifferenzen zwischen den Direktmotoren (1, 1') beweglich ausgeführt ist und mit wenigstens einem Kopplungsbereich (4, 4') mit dem ersten und/oder dem zweiten Befestigungselement (2, 2', 22, 22', 32, 32', 42, 42') einen sphärischen Bewegungsausgleich bereitstellt.

2. Drehmomentstütze gemäß Anspruch 1, **dadurch gekennzeichnet, dass** das Verbindungselement (3, 23, 43) kippbeweglich und/oder torsionsbeweglich ist.

3. Drehmomentstütze gemäß eine der Ansprüche 1 bis 2, **dadurch gekennzeichnet, dass** die Befestigungseinrichtung (2, 2', 22, 22', 32, 32', 42, 42') und/oder das Verbindungselement (3, 23) kippbeweglich, angeordnet sind.

4. Drehmomentstütze gemäß einem der Ansprüche 1 bis 3, **dadurch gekennzeichnet, dass**
die Kippbeweglichkeit durch ein Scharnier, eine Kupplung, ein Gelenk, Kombinationen hiervon oder dergleichen bewirkt wird.

5. Drehmomentstütze gemäß einem der Ansprüche 1 bis 4, **dadurch gekennzeichnet, dass**
das Verbindungselement (3, 23, 43) segmentiert ist und die Segmente mittels eines Kopplungsbereichs (4, 4') verbunden sind.

6. Drehmomentstütze gemäß Anspruch 5, **dadurch gekennzeichnet, dass**
der Kopplungsbereich einen Stutzen und einen Aufnahmebereich (26, 36) aufweist und der Stutzen in dem Aufnahmebereich (26, 36) längsverschiebbar und/oder drehbeweglich gelagert und insbesondere teleskopierbar ist.

7. Drehmomentstütze gemäß Anspruch 5 oder 6, **dadurch gekennzeichnet, dass**
die Kopplungsbereiche (4, 4') als Gleitkupplung zwischen wenigstens einem ersten und einem zweiten Segment des Verbindungselements (3, 23, 43) ausgeführt ist.

8. Drehmomentstütze gemäß Anspruch 7, **dadurch gekennzeichnet, dass**
die Gleitkupplung über wenigstens eine längsverschiebbare Nut- und Federverbindung zwischen den Segmenten des Verbindungselement (3, 23, 43) bereitgestellt wird.

9. Drehmomentstütze gemäß Anspruch 8, **dadurch gekennzeichnet, dass**
die Tiefe der die Feder aufnehmenden Nut größer ist als die der Federn.

10. Drehmomentstütze gemäß Anspruch 8 oder 9, **dadurch gekennzeichnet, dass**
in der Nut ein Profil auswechselbar angeordnet ist, welches seinerseits eine die Feder unmittelbar aufnehmende Nut aufweist.

11. Drehmomentstütze gemäß einem der vorstehenden Ansprüche, **dadurch gekennzeichnet, dass**
die Befestigungseinrichtung (2, 2', 22, 22', 32, 32', 42, 42') mit dem Gehäuse des Motors (1, 1') form- und/oder kraft- und/oder stoffschlüssig verbunden und insbesondere mit diesem verschraubt ist.

12. Drehmomentstütze gemäß einem der vorstehenden Ansprüche, **dadurch gekennzeichnet, dass**
die Befestigungseinrichtung (2, 2', 22, 22', 32, 32', 42, 42') an einer Stirnseite des Motors (1, 1') angeordnet ist und insbesondere als Befestigungsring ausgeführt ist.

13. Drehmomentstütze gemäß einem der vorstehenden Ansprüche, **dadurch gekennzeichnet, dass**
um einen Abschnitt der Schraube (24, 24', 25, 25', 34, 34', 35, 35'), zur wenigstens längsbeweglichen Verbindung, herum ein federelastisches Distanzelement vorgesehen ist, welches durch die Verschraubung über lediglich einen Teil seines gesamtmöglichen Federweges vorgespannt ist.

14. Drehmomentstütze gemäß einem der vorstehenden Ansprüche, **dadurch gekennzeichnet, dass**
wenigstens eine Befestigungseinrichtung (32, 32') auch wenigstens einen Segment des Verbindungselements (35) bildet.

15. Drehmomentstütze gemäß einem der vorstehenden Ansprüche, **dadurch gekennzeichnet, dass**
Verbindungselement (3, 23, 43) drei Segmente aufweist und/oder wenigstens zwei Kopplungsbereiche (4, 4') zwischen den Segmenten vorgesehen sind.

16. Drehmomentstütze gemäß einem der vorstehenden Ansprüche, **dadurch gekennzeichnet, dass**
die Führung der Segmente mittels Blattfedern (24, 24', 25, 25', 34, 34', 35, 35'), insbesondere vorgespannten Blattfedern bewirkt wird.

17. Drehmomentstütze gemäß einem der vorstehenden Ansprüche, **dadurch gekennzeichnet, dass**
der Motor (1, 1') als Direktantrieb für die Aufnahme von Antriebswellen bis zu einem Durchmesser von 300 mm, insbesondere für einen Durchmesser zwischen 100 mm und 300 mm und bevorzugt für 125 mm, 150 mm, 175 mm, 200 mm, 225 mm, 250 mm und/oder 275 mm ausgelegt ist.

18. Drehmomentstütze gemäß einem der vorstehenden Ansprüche, **dadurch gekennzeichnet, dass**
der Motor die Ein- und Anbindung eines Dampfkopfes mit wenigstens einer Hohlwelle ermöglicht.

19. Drehmomentstütze gemäß Anspruch 18, **dadurch gekennzeichnet, dass**
zwischen dem Dampfkopf bzw. der Hohlwelle und dem Motor (1, 1') eine thermische Isolation vorgesehen ist.

20. Drehmomentstütze gemäß Anspruch 18 oder 19, **dadurch gekennzeichnet, dass**
im Bereich der Hohlwelle eine Lagerglocke angeordnet ist.

21. Verwendung einer Drehmomentstütze gemäß einem der vorstehenden Ansprüche für den Antrieb von Zylindern, Walzen und dergleichen in einer Papiermaschine, Druckmaschine, Walzwerken oder dergleichen.

## Claims

1. A torque support for direct-drive motors, the torque support consisting of a system having at least a first and a second fastening element fortorque-resistant mounting to at least a first and a second direct-drive motor (1,1') and at least one connecting element (3,23,43) between the first and the second fastening element (2, 2', 22, 22', 32, 32°, 42, 42'),
**characterized in that**
the system has a modular design and the replaceable connecting element (3, 23, 43), of the first and the second fastening element, is configured movably at least in its longitudinal direction to compensate for differences in distance between the direct-drive motors (1,1'), and provides spherical motion compensation with at least one coupling portion (4, 4') with the first and/or the second fastening element (2, 2', 22, 22', 32, 32', 42, 42').

2. The torque support of claim 1, **characterized in that** the connecting element (3, 23, 43) is tiltable and/or torsionally movable.

3. The torque support of either of claims 1 to 2, **characterized in that** the fastening device (2, 2', 22, 22', 32, 32', 42, 42') and/or the connecting element (3, 23) are tiltably arranged.

4. The torque support of any of claims 1 to 3, **characterized in that** tiltability is effected by a hinge, a clutch, a joint, combinations thereof or the like.

5. The torque support of any of claims 1 to 4, **characterized in that** the connecting element (3, 23,43) is segmented and the segments are connected by means of a coupling portion (4,4').

6. The torque support of claim 5, **characterized in that**
the coupling portion includes a connection part and a receiving portion (26,36) and the connection part is supported in the receiving portion (26,36) in a longitudinally slidable and/or rotatable manner and is, in particular, telescopic.

7. The torque support of claim 5 or 6, **characterized in that**
the coupling portions (4,4') are configured as a slip coupling between at least a first and a second segment of the connecting element (3, 23, 43).

8. The torque support of claim 7, **characterized in that**
the slip coupling is provided by at least one longitudinally slidable key-and-slot connection between the segments of the connecting element (3, 23,43).

9. The torque support of claim 8, **characterized in that**
the depth of the slot receiving the key is greater than that of the keys.

10. The torque support of claim 8 or 9, **characterized in that**
there is a profile replaceably arranged in the slot, the profile in turn having a slot which directly receives the key.

11. The torque support of any preceding claim, **characterized in that** the fastening device (2, 2', 22, 22', 32, 32', 42,42') is connected to the housing of the motor by positive and/or frictional engagement and/or by adhesive force and is, in particular, bolted thereto.

12. The torque support of any preceding claim, **characterized in that**
the fastening device (2, 2', 22, 22', 32, 32', 42,42') is arranged on a front side of the motor (1,1') and is, in particular, configured as a fastening ring.

13. The torque support of any preceding claim, **characterized in that**
there is provided about a section of the bolt (24, 24', 25, 25', 34, 34', 35, 35'), for an at least longitudinally movable connection, a resilient spacer element which is biased by being screwed over only part of its total possible spring deflection.

14. The torque support of any preceding claim, **characterized in that**
at least one fastening device (32,32') also forms at least one segment of the connecting element (35).

15. The torque support of any preceding claim, **characterized in that**
the connecting element (3, 23,43) includes three segments, and/or at least two coupling portions (4,4') are provided between the segments.

16. The torque support of any preceding claim, **characterized in that**
the segments are guided by means of leaf springs (24,24', 25, 25', 34, 34', 35,35'), in particular by biased leaf springs.

17. The torque support of any preceding claim, **characterized in that**
the motor (1,1') is designed as a direct drive for accommodating drive shafts up to 300 mm in diameter, in particular between 100 mm and 300 mm in diameter, and preferably 125 mm, 150 mm, 175 mm, 200 mm, 225 mm and/or 275 mm.

18. The torque support of any preceding claim, **characterized in that**
the motor allows for incorporation of, and connection to, a rotary union with at least one hollow shaft.

19. The torque support of claim 18, **characterized in that**
there is thermal insulation provided between the rotary union and the hollow shaft, respectively, and the motor (1,1').

20. The torque support of claim 18 or 19, **characterized in that**
there is a bell-shaped bearing arranged in the vicinity of the hollow shaft.

21. The use of a torque support of any preceding claim for driving cylinders, rolls and the like in a paper machine, printing machine, rolling facilities or the like.

## Revendications

1. Support de couple pour les moteurs directs, se composant d'un système avec au moins un premier et un second élément de fixation en vue du montage résistant à la torsion sur au moins un premier et un second moteur direct (1, 1') et au moins un élément de liaison (3, 23, 43) entre le premier et le second élément de fixation (2, 2', 22, 22', 32, 32', 42, 42'),
**caractérisé en ce que**
le système est configuré de manière modulaire et **en ce que** l'élément de liaison échangeable du premier et du second élément de fixation (3, 23, 43) est agencé de manière mobile au moins dans sa direction longitudinale, en vue de la compensation des différences d'écart entre les moteurs directs (1, 1') et met à disposition une compensation sphérique de mouvement avec au moins une zone de couplage (4, 4') avec le premier et/ou le second élément de fixation (2, 2', 22, 22', 32, 32', 42, 42').

2. Support de couple selon la revendication 1, **caractérisé en ce que** l'élément de liaison (3, 23, 43) est mobile par culbutement et/ou mobile par torsion.

3. Support de couple selon une quelconque des revendications 1 à 2, **caractérisé en ce que** le dispositif de fixation (2, 2', 22, 22', 32, 32', 42, 42') et/ou l'élément de liaison (3, 23) sont disposés de manière mobile par culbutement.

4. Support de couple selon une quelconque des revendications 1 à 3, **caractérisé en ce que** la mobilité par culbutement est entraînée par une charnière, par un coupleur, par une articulation, des combinaisons de ceux-ci ou similaires.

5. Support de couple selon une quelconque des revendications 1 à 4, **caractérisé en ce que**
l'élément de liaison (3, 23, 43) est segmenté et **en ce que** les segments sont reliés au moyen d'une zone de couplage (4, 4').

6. Support de couple selon la revendication 5, **caractérisé en ce que**
la zone de couplage présente un manchon et une zone de réception (26, 36) et **en ce que** le manchon est tourné sur paliers de manière mobile longitudinale et/ou de manière mobile rotative dans la zone de réception (26, 36) et est notamment télescopique.

7. Support de couple selon les revendications 5 ou 6, **caractérisé en ce que**
les zones de couplage (4, 4') sont réalisées en coupleur glissant entre au moins un premier et un second segment de l'élément de liaison (3, 23, 43).

8. Support de couple selon la revendication 7, **caractérisé en ce que**
le coupleur glissant est mis à disposition via au moins un assemblage par rainure et languette mobile longitudinal entre les segments de l'élément de liaison (3, 23, 43).

9. Support de couple selon la revendication 8, **caractérisé en ce que**
la profondeur de la rainure recevant la languette est plus grande que celle des languettes.

10. Support de couple selon les revendications 8 ou 9, **caractérisé en ce que**
dans la rainure, un profil est disposé de manière interchangeable, qui présente de son côté une rainure recevant directement la languette.

11. Support de couple selon une quelconque des revendications précédentes,
**caractérisé en ce que**
le dispositif de fixation (2, 2', 22, 22', 32, 32', 42, 42') est relié avec le carter du moteur (1, 1') de manière mécanique et/ou par adhérence et/ou par matière, et est notamment vissé avec celui-ci.

12. Support de couple selon une quelconque des revendications précédentes,
**caractérisé en ce que**
le dispositif de fixation (2, 2', 22, 22', 32, 32', 42, 42') est disposé sur une face frontale du moteur (1, 1') et **en ce qu'**il est réalisé notamment en anneau de fixation.

13. Support de couple selon une quelconque des revendications précédentes,
**caractérisé en ce que**
autour d'une section de la vis (24, 24', 25, 25', 34, 34', 35, 35'), en vue de la liaison au moins mobile longitudinalement, un élément d'écartement élastique à ressort est prévu, qui est prétendu par le vissage sur seulement une partie de son débattement possible total.

14. Support de couple selon une quelconque des revendications précédentes,
**caractérisé en ce que**
au moins un dispositif de fixation (32, 32') constitue également au moins un segment de l'élément de liaison (35).

15. Support de couple selon une quelconque des revendications précédentes,
**caractérisé en ce que**
l'élément de liaison (3, 23, 43) présente trois segments et/ou **en ce qu'**au moins deux zones de couplage (4, 4') sont prévues entre les segments.

16. Support de couple selon une quelconque des revendications précédentes,
**caractérisé en ce que**
le guidage des segments est entraîné par des ressorts à lame (24, 24', 25, 25', 34, 34', 35, 35'), notamment des ressorts à lame prétendus.

17. Support de couple selon une quelconque des revendications précédentes,
**caractérisé en ce que**
le moteur (1, 1') est réalisé comme entraînement direct pour la réception d'arbres d'entraînement jusqu'à un diamètre de 300 mm, notamment pour un diamètre entre 100 mm et 300 mm et de préférence pour 125 mm, 150 mm, 175 mm, 200 mm, 225 mm, 250 mm et/ou 275 mm.

18. Support de couple selon une quelconque des revendications précédentes,
**caractérisé en ce que**
le moteur permet l'encastrement et le rattachement d'une tête à vapeur avec au moins un arbre creux.

19. Support de couple selon la revendication 18, **caractérisé en ce que**
entre la tête à vapeur et/ou l'arbre creux et le moteur (1, 1'), une isolation thermique est prévue.

20. Support de couple selon les revendications 18 ou 19, **caractérisé en ce que**
dans la zone de l'arbre creux, une cloche de palier est disposée.

21. Utilisation d'un support de couple selon une quelconque des revendications précédentes pour l'entraînement de vérins, de rouleaux et similaires, dans une machine à papier, une imprimante, des laminoirs ou similaires.
